# EUROPÄISCHE PATENTANMELDUNG

(11) **EP 1 586 509 A2**
(43) Veröffentlichungstag der Anmeldung: **19.10.2005**
(21) Anmeldenummer: 05006985.5
(22) Anmeldetag: 31.03.2005
(51) Int. Cl.: B65D 5/50, B29C 65/64

(54) **Warenverpackung mit einer Trägerplatte aus Pappe**

(30) Priorität: 14.04.2004 DE 202004006027 U
(71) Anmelder: Emba-Protec GmbH, 32602 Vlotho (DE)
(72) Erfinder: Frankowski, Boris, 32584 Löhne (DE)
(74) Vertreter: Schober, Mirko

(57) **Zusammenfassung**

Die Erfindung betrifft eine Warenverpackung mit einer Trägerplatte (1) aus Pappe und einer den darauf aufgenommenen Warenartikel überspannenden Folie (5). Die Folie (5) ist im Randbereich der Trägerplatte (1) jeweils über einen Flächenbereich (6) hinweg mit der Pappe verklebt. Sie besteht aus einem wärmeschmelzbaren Kunststoff und ist auf die Flächenbereiche (6) der Trägerplatte (1) aufgeschweißt. In den Flächenbereichen (6) ist eine Mehr- oder Vielzahl von Einschnitten (7) an der zur Folie (5) hin liegenden Seite in der Pappe angeordnet.

## Beschreibung

Die Erfindung bezieht sich auf eine Warenverpackung mit einer Trägerplatte aus Pappe und einer den darauf aufgenommenen Warenartikel überspannenden Folie, die im Randbereich der Trägerplatte jeweils über einen Flächenbereich hinweg mit der Pappe verklebt ist.

Bei Warenverpackungen der vorgenannten Art wird der auf der Trägerplatte aufgenommene Warenartikel mittels der ihn überspannenden Folie gesichert. Dies geschieht, indem der Warenartikel durch Anheben unter die in der Regel dehnbare Folie untergeschoben wird. Zusätzlich kann auch durch klappbare Randstege an der Trägerplatte, an denen in diesem Fall die Folie befestigt ist, eine weitere Spannung der Folie vorgenommen werden. An den Befestigungsstellen der Folie müssen deshalb nicht unerhebliche Zugkräfte aufgenommen werden.

Bei bekannten Warenverpackungen der obengenannten Art wird deshalb auf die Flächenbereiche der Trägerplatte, mit denen die Folie verklebt wird, ein die Folie sichernder Klebstoff aufgetragen.

Der Erfindung liegt deshalb die Aufgabe zugrunde, eine Warenverpackung der eingangs genannten Art zu schaffen, bei der die Folie in den betreffenden Flächenbereichen der Trägerplatte auf der Pappe ausschließlich aufgrund eigener Klebkraft befestigt werden kann.

Diese Aufgabe wird bei einer Warenverpackung der genannten Art dadurch gelöst, daß die Folie aus einem wärmeschmelzbaren Kunststoff besteht und auf die Flächenbereiche der Trägerplatte aufgeschweißt ist, wobei in diesen Flächenbereichen eine Mehr- oder Vielzahl von Einschnitten in der zur Folie hin liegenden Seite in der Pappe angeordnet ist.

Für die Erfindung ist wesentlich, daß die Einschnitte in der Pappe im Bereich der Befestigungsstellen der Folie für eine Oberflächenstruktur sorgen, welche die Verkrallung zwischen der mittels eines Heißstempels aufgepreßten, angeschmolzenen Folie mit der Pappe erheblich verbessert. Die Einschnitte können nach Art einer feinen Perforierung ausgebildet sein, es reicht jedoch auch, wenn die Pappe in den zur Verklebung bestimmten Flächenbereichen der Trägerplatte lediglich angeritzt ist.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Figur 1 -: eine perspektivische Wiedergabe einer Trägerplatte für eine Warenverpackung;
- Figur 2 -: die Draufsicht auf die Trägerplatte gemäß Figur 1 in der Ausgangslage;
- Figuren 3 bis 6 -: Draufsichten jeweils auf einen der Randbereiche der Trägerplatte nach den Figuren 1 und 2 mit den Befestigungsbereichen für die die Trägerplatte überspannende Folie.

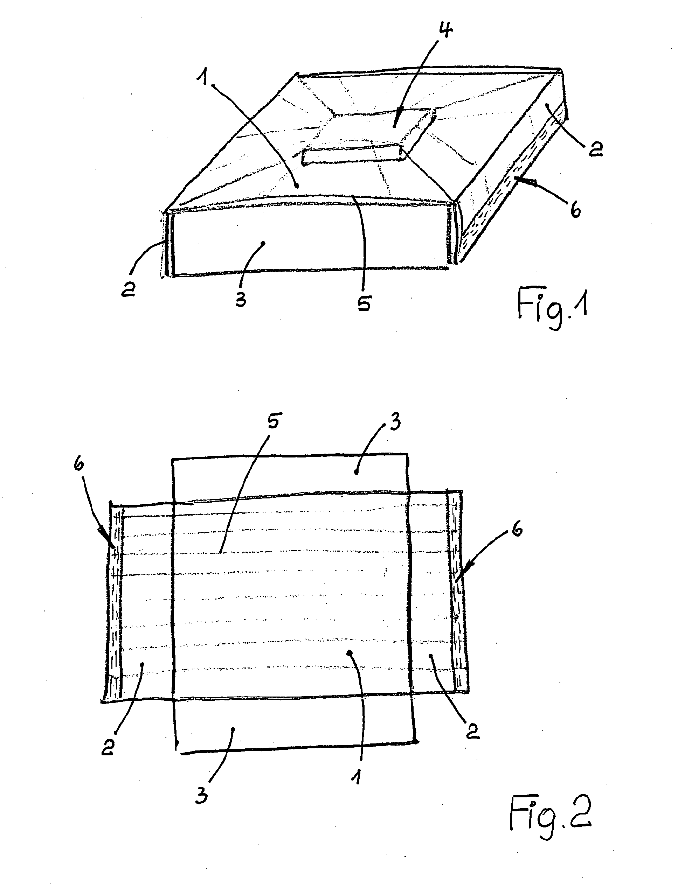

Im einzelnen zeigen die Figuren 1 und 2 eine Trägerplatte 1, die zumindest in ihrem zentralen Bereich eine quadratische oder rechteckige Grundform aufweist. An einander gegenüberliegenden Seiten schließen an den zentralen Bereich der Trägerplatte 1 erste Randstege 2 an, die mittels Falz- oder Faltlinien so mit dem zentralen Bereich der Trägerplatte 1 verbunden sind, daß sie demgegenüber rechtwinklig abgeklappt werden können. In gleicher Weise sind auch an den weiteren, einander gegenüberliegenden Seiten des Zentralbereichs der Trägerplatte 1 zweite Randstege 3 vorgesehen.

Figur 1 zeigt die Randstege 2 und 3 in rechtwinklig abgeklappter Lage zum Zentralbereich der Trägerplatte 1, während Figur 2 die mit dem Zentralbereich der Trägerplatte 1 flach liegende Ausgangslage der Randstege 2 und 3 der Trägerplatte 1 wiedergibt.

Wie Figur 1 veranschaulicht, dient der Zentralbereich der Trägerplatte 1 zur Aufnahme eines Warenartikels 4, der in seiner Lage durch eine spannbare Folie gesichert ist. Die Folie 5 besteht aus einem wärmeschmelzbaren Kunststoff und ist entlang der freien Ränder der ersten Randstege 2 an der Trägerplatte 1 befestigt. Entlang der Ränder der Randstege 2 sind somit an der Trägerplatte 1 Flächenbereiche 6 gebildet, welche die Form eines länglichen, schmalen Streifens haben. Die Befestigung der Folie 5 an den Randstegen 2 erlaubt es, sie von der Oberseite des Zentralbereichs der Trägerplatte 1 abheben zu können, indem die Randstege 2 nach oben hin über die Oberseite des Zentralbereichs der Trägerplatte 1 vorstehend umgeklappt werden. In dieser Position kann der Warenartikel 4 auf der Oberseite der Trägerplatte 1 plaziert werden. Werden daraufhin die Randstege 2 nach unten hin umgeklappt in diejenige Lage, die Figur 1 wiedergibt, dann spannt sich die Folie 5 über den Warenartikel 4, um ihn auf der Oberseite der Trägerplatte 1 zu sichern. Hierbei treten Zugspannungen in der Folie 5 auf, die eine zuverlässige Befestigung in den randlichen Flächenbereichen 6 der Randstege 2 an der Trägerplatte 1 erfordern.

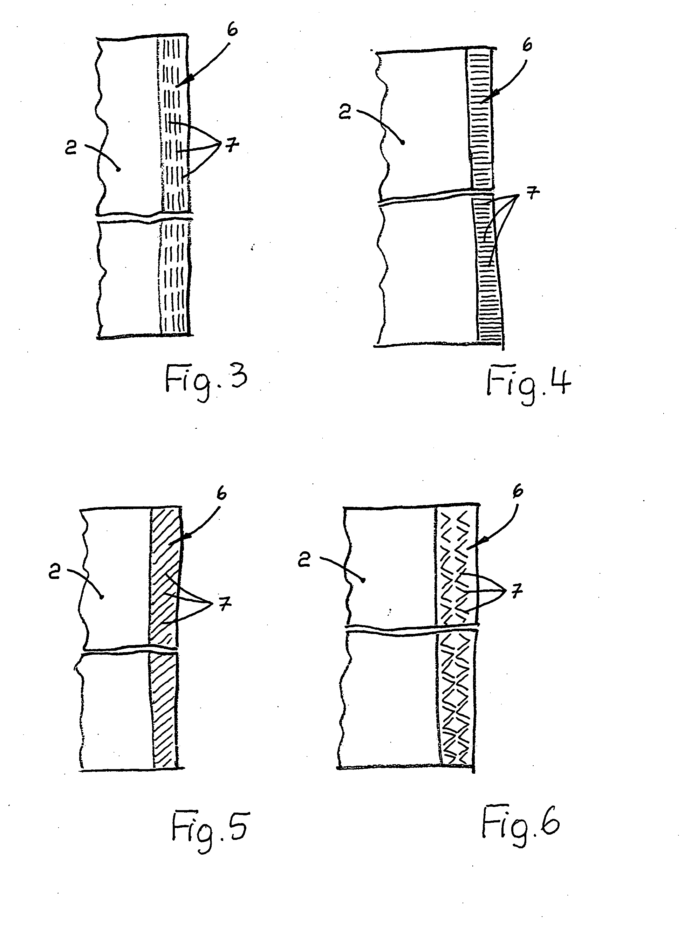

Wie im einzelnen dazu die Figuren 3 bis 6 deutlich machen, finden sich in diesen Flächenbereichen 6 der Trägerplatte 1, die sich beim Ausführungsbeispiel an den Randstegen 2 befinden, Einschnitte 7 in Gestalt von Schlitzen. Diese Schlitze 7 können durch das Pappmaterial der Trägerplatte 1 bzw. der Randstege 2 hindurchgehen, sie können sich aber auch nur an der zur Folie 5 hin liegenden Oberseite befinden, weil es dort auf die Ausbildung einer Oberflächenstruktur des Pappmaterials ankommt, um die wärmeschmelzbare Folie 5, die aus einem geeigneten Kunststoff besteht, aufgrund eigener Klebkraft mit der Papp-Oberfläche sicher verbinden zu können. Dazu wird der Randbereich der Folie 5 mittels eines Heißstempels auf die Flächenbereiche 6 aufgepreßt und hierbei so weit angeschmolzen, daß eine Verkrallung und Verklebung des Kunststoffmaterials der Folie 5 in den Flächenbereichen 6 der Trägerplatte 1 bzw. deren Randstege 2 erfolgt.

Wie Figur 3 im einzelnen zeigt, können die schlitzförmigen Einschnitte 7 entlang von längslaufenden Linien in den länglichen, schmalen Flächenbereichen 6 angeordnet sein. Die Einschnitte 7 haben hier eine kurze Länge und sind in Längsrichtung der Flächenbereiche 6 jeweils in einer Viel- oder Mehrzahl hintereinanderliegend angeordnet. Dabei reichen sie über die Gesamtlänge der Flächenbereiche 6, was bei allen denkbaren Gestaltungsformen der Einschnitte 7 der Fall ist.

So zeigt Figur 4 schlitzförmige Einschnitte 7, die sich in Querrichtung der länglichen Flächenbereiche 6 erstrecken.

Die Länge der Einschnitte 7 entspricht hier der Streifenbreite der Flächenbereiche 6.

Figur 5 veranschaulicht Einschnitte 7, die schräg zur Längsrichtung der länglichen Flächenbereiche 6 verlaufen. Auch bei dieser Ausführungsform reichen die Einschnitte 7 von dem einen Streifenrand des jeweiligen Flächenbereichs 6 bis zum parallel gegenüberliegenden Rand.

Figur 6 gibt Einschnitte 7 wieder, die winkelförmig ausgebildet sind. Grundsätzlich gibt es eine unendliche Gestaltungsmöglichkeit für die Einschnitte 7, die unter anderem auch in Gestalt von Nadellöchern in das Pappmaterial eingebracht sein können. Dies hängt von der Ausbildung des Werkzeugs ab, mit dem das Anschneiden, die Perforierung oder die Ritzung des Pappmaterials vorgenommen wird.

## Patentansprüche

1. Warenverpackung mit einer Trägerplatte aus Pappe und einer den darauf aufgenommenen Warenartikel überspannenden Folie, die im Randbereich der Trägerplatte jeweils über einen Flächenbereich hinweg mit der Pappe verklebt ist,
**dadurch gekennzeichnet,**
**daß** die Folie (5) aus einem wärmeschmelzbaren Kunststoff besteht und auf die Flächenbereiche (6) der Trägerplatte (1) aufgeschweißt ist, wobei in den Flächenbereichen (6) eine Mehr- oder Vielzahl von Einschnitten (7) an der zur Folie (5) hin liegenden Seite in der Pappe angeordnet ist.

2. Warenverpackung nach Anspruch 1,
**dadurch gekennzeichnet,**
**daß** die Flächenbereiche (6) der Trägerplatte (1), auf denen die Folie (5) aufgeschweißt ist, die Form länglicher, gerader Streifen haben und die Einschnitte (7) auf der gesamten Länge der Flächenbereiche (6) vorgesehen sind.

3. Warenverpackung nach Anspruch 2,
**dadurch gekennzeichnet,**
**daß** die Einschnitte (7) über die volle Breite der Flächenbereiche (6) der Trägerplatte (1) angeordnet sind.

4. Warenverpackung nach einem der Ansprüche 1 bis 3,
**dadurch gekennzeichnet,**
**daß** die Einschnitte (7) in den Flächenbereichen (6) der Trägerplatte (1) schlitzartig ausgebildet sind.

5. Warenverpackung nach einem der Ansprüche 2 bis 4,
**dadurch gekennzeichnet,**
**daß** eine Mehr- oder Vielzahl der Einschnitte (7) in Längsrichtung der streifenförmigen Flächenbereiche (6) der Trägerplatte (1) hintereinander in dieser Längsrichtung verlaufend angeordnet sind.

6. Warenverpackung nach einem der Ansprüche 2 bis 4,
**dadurch gekennzeichnet,**
**daß** eine Mehr- oder Vielzahl der Einschnitte (7) in Längsrichtung der streifenförmigen Flächenbereiche (6) der Trägerplatte (1) nebeneinander in Querrichtung der Streifenform verlaufend angeordnet sind.

7. Warenverpackung nach Anspruch 5 oder 6,
**dadurch gekennzeichnet,**
**daß** die Einschnitte (7) in den streifenförmigen Flächenbereichen (6) der Trägerplatte (1) schräg zur Längsrichtung der Streifenform angeordnet sind.

8. Warenverpackung nach Anspruch 6 oder 7,
**dadurch gekennzeichnet,**
**daß** sich jeder der Einschnitte (7) über die gesamte Breite der streifenförmigen Flächenbereiche (6) der Trägerplatte (1) erstreckt.

9. Warenverpackung nach einem der Ansprüche 1 bis 8,
**dadurch gekennzeichnet,**
**daß** sich die Flächenbereiche (6) mit der daran verschweißten Folie (5) an einander gegenüberliegenden Randstegen (2) der Trägerplatte (1) befinden, die aus der Ebene des zen-tralen Aufnahmebereichs der Trägerplatte (1) herausklappbar sind.

10. Warenverpackung nach einem der Ansprüche 1 bis 9,
**dadurch gekennzeichnet,**
**daß** die auf die Flächenbereiche (6) der Trägerplatte (1) aufgeschweißte Folie (5) dehnbar ist.
